# EUROPÄISCHE PATENTSCHRIFT

(11) **EP 0 912 877 B1**
(45) Veröffentlichungstag und Bekanntmachung des Hinweises auf die Patenterteilung: **17.09.2003**
(21) Anmeldenummer: 97934463.7
(22) Anmeldetag: 15.07.1997
(51) Int. Cl.: G01D 5/36

(54) **MECHANISCHE TOLERANZABGRENZUNG EINER OPTISCHEN ÜBERTRAGUNGS-STRECKE**
MECHANICAL DELIMITATION OF THE TOLERANCES OF AN OPTICAL TRANSMISSION SECTION
DELIMITATION MECANIQUE DES TOLERANCES D'UNE SECTION DE TRANSMISSION OPTIQUE

(30) Priorität: 18.07.1996 DE 19629005
(43) Veröffentlichungstag der Anmeldung: 06.05.1999
(73) Patentinhaber: Valeo Schalter und Sensoren GmbH, 74321 Bietigheim-Bissingen (DE)
(72) Erfinder: NECKEL, Klaus, D-71665 Vaihingen (DE)
(74) Vertreter: Dreiss, Fuhlendorf, Steimle & Becker
(86) Internationale Anmeldenummer: EP9703765
(87) Internationale Veröffentlichungsnummer: WO98003838

(56) Entgegenhaltungen:
- EP-A- 0 036 976
- EP-A- 0 184 769
- EP-A- 0 232 625
- FR-A- 2 156 990

## Beschreibung

Die Erfindung betrifft eine optische Abtastvorrichtung, insbesondere für Lenkwinkelsensoren. Bei derartigen Abtasteinrichtungen ist ein Codeträger vorgesehen, welcher über seine Länge oder über seinen Kreisumfang verteilt Zahnsegmente besitzt. Diese Segmente werden von einer vor den Zahnsegmenten angeordneten Strahlungssender angestrahlt und die die Zwischenräume zwischen den Segmenten passierende Strahlung durch einen hinter den Zahnsegmenten angeordneten Empfänger gemessen.

Vielfach ist es erwünscht, daß das Ausgangssignal des Empfängers ein bestimmtes Verhältnis von Impulsen zu Impulspausen aufweist, beispielsweise das Verhältnis 1:1. Um das zu erreichen, muß ein Impulsformer eingesetzt werden. Dieser formt die Ausgangssignale einer empfangenden Fotodiode in rechteckförmige Signale am Ausgang des Empfängers um. Um nun ein bestimmtes Impuls-Pausenverhältnis am Ausgang zu erreichen, kann entweder die Sendespannung geändert werden, so daß der Pegel der Strahlung sich vermindert und somit die Ansprechschwelle des Umformers zeitlich verschoben empfangsseitig erreicht wird. Die andere Möglichkeit besteht darin, die Ansprechschwelle auf der Empfangsseite zu ändern, so daß hierdurch wiederum Anfang und Ende der betreffenden Ausgangsimpulse geregelt werden kann. Beide Maßnahmen sind aufwendig und erfordern eine komplizierte Regelung.

Die Erfindung geht daher aus von einer Abtastvorrichtung der sich aus dem Oberbegriff des Anspruchs 1 ergebenden Gattung. Aufgabe der Erfindung ist es, ausgangsseitig mit einfachen Mitteln ein vorgegebenes Abtastverhältnis zu erreichen. Die Erfindung löst die gestellte Aufgabe nach dem Anspruch 1. Die Erfindung besteht im Prinzip also darin, für den Sendestrom einen vergleichsweise hohen Wert zu wählen, so daß der Fototransistor nahe der Sättigung arbeitet. Hierdurch ist auch sendeseitig die Abtastvorrichtung weniger empfindlich für Strom- oder Spannungsschwankungen sowie für aus der Umgebung kommende Strahlung. Durch die erhöhte Sendestrahlung ändert sich auf der Ausgangsseite bei gleicher Ansprechschwelle des Empfängers das Tastverhältnis. Will man die Ansprechschwelle nicht ändern, die auf möglichst hohe Empfindlichkeit eingerichtet ist, so schlägt die Erfindung vor, das Längenverhältnis von Zähnen und Zahnlücken auf dem Codeträger in geeigneter Weise abzuändern. Wird also durch die Erhöhung des Sendestroms das Verhältnis von Impulsen zu Impulspausen ausgangsseitig vergrößert, so wird man eingangsseitig die Länge der Zähne vegrößernn und dementsprechend die Länge der Zahnlücken verkleinern. Erhält man etwa durch Verwendung einer invertierenden Schaltung bei vorgegebener Zahnlänge auf dem Codeträger zu kurze (positive) Ausgangsimpulse, so wird man dementsprechend die Länge der Zähne verbreitern und damit die Zahnlücken verkleinern, um das Verhältnis der Ausgangsimpulse (d.h.zu lange negative Impulse) zu den entsprechenden Impulspausen zu vergrößern.

In Weiterbildung der Erfindung ergibt sich als günstiges Verhältnis zwischen Impuls zu Impulspause das Verhältnis 1:1.

Eine besonders einfache Ausgestaltung für den Codeträger erhält man durch die Merkmale nach Anspruch 3 für den Fall, daß mittels der Abtasteinrichtung Drehwinkel gemessen werden sollen.

Dabei können die Zähne senkrecht zur Scheibe kreisförmig auf dem Scheibenrand angebracht sein, wie dies gemäß Anspruch 4 vorgeschlagen wird.

Hinsichtlich Sender und Empfänger empfiehlt sich gemäß Anspruch 5, den Sender mit einem Fototransistor und den Empfänger mit einer Fotodiode zu versehen.

Ein Ausführungsbeispiel der Erfindung wird nachfolgend anhand der Zeichnung erläutert. Darin zeigt:
- Fig. 1: den Aufbau der Zähne einer bereits vorgeschlagenen Form einer Codescheibe und die daraus sich ergebenden Signale am Ausgang der Diode und am Ausgang des Umformers.
- Fig. 2: die Zähne auf einer Codescheibe der vorliegenden Erfindung und die hieraus resultierenden Signale am Ausgang der Diode und am Ausgang des Konverters.

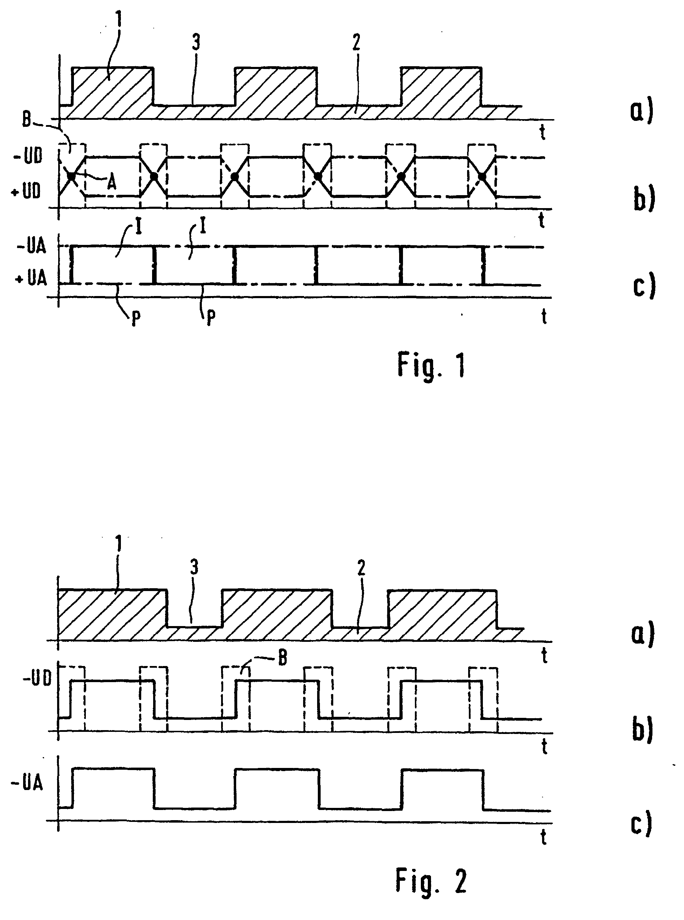

In Fig. 1a sind ausschnittsweise die Zähne Z am Rand einer an sich bekannten Codescheibe dargestellt. Dabei stellen die Zähne 1 strahlungsundurchlässige Bereiche und die Zahnlücken 3 strahlungsdurchlässige Bereiche für einen nicht dargestellten Fototransistor dar, dessen Strahlung empfangsseitig von einer nicht dargestellten Fotodiode gemessen wird. Am Ausgang der Diode ergibt sich eine Spannung +UD bzw. bei Verwendung einer Inversionsschaltung die Spannung -UD. Wichtig für die bereits vorgeschlagene Schaltung ist es, daß beim Erreichen der Auslöseschwelle A in Fig. 1 durch die Ausgangsspannung der Diode der nicht dargestellte Umformer einen entsprechenden Impuls (siehe Kurve c) beginnt bzw. beendet, je nachdem, ob ein Inversionsglied verwendet wird oder nicht. Die Länge des Impulses I bzw. der Impulspause der Spannungen am Ausgang des Empfängers (-UA für eine invertierende Schaltung +UA für eine nicht invertierende Schaltung) hängt von der Lage der Auslöseschwelle A in Fig. 1b und/oder der Länge des Zahns 1 bzw. der Zahnlücke 3 in der Codescheibe 2 in Fig. 1a ab. Will man das Längenverhältnis der Impulse I zu den Impulspausen P am Ausgangssignal (Fig. 1c) ändern, so kann man einerseits die Ansprechschwelle durch eine entsprechende Beeinflussung einer Regelschaltung verändern. Die vorliegende Erfindung schlägt hier vereinfacht vor, das Verhältnis der Länge zwischen Zähnen 1 zu zahnlücken 3 in entsprechender Weise abzuändern, wie dies in Fig. 2 (siehe Fig. 2a) dargestellt ist. In den Fig. b von Fig. 1 und 2 ist noch symbolisch die sich mit der Zeit t verändernde Lage der Blende gegenüber der Codescheibe dargestellt. An sich ist für die Erzeugung der Ausgangssignale nur die Relativbewegung der Zähne 1 auf der Codescheibe (siehe Fig. 1a) gegenüber der Blende b (siehe Fig. 1b) wichtig. In den Fig. ist die Lageänderung der Blende b gegenüber den Zähnen 1 in Fig. 1a gestrichelt angedeutet. In der Regel wird es aber so sein, daß die Lage von Blende, Sender und Empfänger, die alle miteinander in etwa fluchten, örtlich fest ist, während die Zähne auf der Impulsscheibe sich an der Blende vorbeibewegen.

Fig. 2 zeigt eine Codescheibe 2, bei der die Länge der Zähne 1 gegenüber den Zahnlücken 3 vergrößert wurde. Hierdurch wird das gewünschte Ringverhältnis zwischen Impulsen und Impulspausen von 1:1 erreicht.

Die vorliegende Erfindung ist auch unter dem Gesichtspunkt zu sehen, daß Sender und Empfänger (Fototransistor und Fotodiode) als handelsfähiges Bauteil angeboten werden, dabei läßt sich durch Regelung der an dieses Bauteil angelegten Spannung das Verhältnis von Impuls zu Impulspause ausgangsseitig bei einem vorgegebenen eingangsseitigen Verhältnis regeln. Erhöht man nun die an dieses Bauteil angelegte Spannung stark, so werden die ausgangsseitig abgegebenen Impulse vergleichsweise groß gegenüber den Impulspausen. Soll nun das Verhältnis von Zahn zu Zahnlücke bei großem auf das Bauteil gegebenen Spannungen dem Verhältnis von Impuls zu Impulspause am Ausgang des Empfängers übereinstimmen, so muß die Länge der Zähne vergrößert werden.

Die Erfindung läßt sich damit wie folgt kurz beschreiben: Die optische Abtasteinheit eines Lenkwinkelsensors (LWS) wird bewußt "mechanisch grob" gehalten. Dadurch kann sie einfach gefertigt werden und die Verschmutzungsgefahr im Betrieb ist geringer. Das bedeutet, die Blende ist sehr breit wegen Verschmutzungsgefahr.

Dabei ist aber zu beachten, daß bei der optischen Abtastung der Codescheibe (Zähne und Lücken) des LWS wird mit einer Blende gearbeitet wird. Um ein konstantes, exaktes Puls-Pausen-Verhältnis (PPV) zu erhalten, muß die optische Strekke (Fototransistor und Fotodiode) in einem bestimmten Arbeitspunkt betrieben werden. Bei dieser Funktionsweise muß der LED-Strom geregelt werden, was sehr aufwendig ist.

Erfindungsgemäß werden die Zähne der Codescheiben so dimensioniert, daß sich bei maximalem LED-Strom ein PPV von 50 % / 50 % einstellt.

Man erhält folgende Vorteile: Die Güte des Ausgangssignals ist von der Lichtstärke (LED-Strom) nicht mehr abhängig und unempfindlicher gegen Verschmutzung. Weiterhin spielt die Alterung der LED keine Rolle mehr und die Serienstreuung muß nicht mehr durch Laserabgleich kompensiert werden.

## Patentansprüche

1. Optische Abtastvorrichtung insbesondere für Lenkwinkelsensoren mit einem einander abwechselnd für Strahlung durchlässige und undurchlässige Bereiche aufweisenden Codeträger und einem die Strahlung auf die Bereiche abstrahlenden Strahlungssender und einem die die Bereiche passierende Strahlung messenden Strahlungsempfänger, wobei das Ausgangssignal des Strahlungsempfängers aus einem Zug von Impulsen mit einem vorgegebenen Verhältnis von Impulslänge zu Impulspause besteht, **dadurch gekennzeichnet, daß** der Sender mit sehr hoher, vorzugsweise maximaler Leistung betrieben ist und die einander abwechselnden Bereiche auf dem Codeträger derart in ihrem Längenverhältnis gewählt sind, daß das Ausgangssignal des Strahlungsempfängers das vorgegebene Längenverhältnis erreicht.

2. Abtastvorrichtung nach Anspruch 1, **dadurch gekennzeichnet, daß** das Längenverhältnis 1:1 ist.

3. Abtastvorrichtung nach Anspruch 1 oder 2, **dadurch gekennzeichnet, daß** der Codeträger (2) eine Zahnscheibe ist, auf deren Umfang die Bereiche (1,3) kreisförmig verteilt sind.

4. Abtastvorrichtung nach Anspruch 3, **dadurch gekennzeichnet, daß** die Scheibe einen ringförmig zur Drehachse der Scheibe und konzentrisch zu dieser versehenen Ringansatz aufweist, in den die Zähne (1) eingearbeitet sind.

5. Abtastvorrichtung nach einem der vorangegangenen Ansprüche, **dadurch gekennzeichnet, daß** der Sender einen Fototransistor und der Empfänger eine Fotodiode aufweist.

## Claims

1. Optical scanning device, in particular, for steering angle sensors, with a code carrier that contains an alternating arrangement of regions that are permeable to radiation and regions that are impermeable to radiation, with a radiation transmitter that irradiates the permeable and impermeable regions, and with a radiation receiver that measures the radiation passing through the respective regions, wherein the output signal of the radiation receiver consists of a pulse train with a predetermined ratio between pulse length and interpulse periods, **characterized in that** the transmitter being operated at very high, in particular at the maximum power and the length ratios between the alternating regions on the code carrier being chosen such that the output signal of the radiation receiver reaches the predetermined length ratio.

2. Scanning device according to claim 1, **characterized by** the predetermined length ratio being 1:1.

3. Scanning device according to claim 1 or 2, **characterized in that** the code carrier (2) is a toothed disk, on the periphery of which the regions (1, 3) are circularly distributed.

4. Scanning device according to claim 3, **characterized in that** the disk contains an annular projection which is arranged to be annular and concentric to the rotational axis of the disk, wherein the teeth (1) are formed in.

5. Scanning device according to one of the preceding claims, **characterized in that** the transmitter contains a phototransistor and the receiver contains a photodiode.

## Revendications

1. Dispositif d'exploration optique notamment pour des capteurs d'angle de braquage, comprenant un support de code présentant des zones alternativement perméables et imperméables au rayonnement, et un émetteur de rayonnement envoyant le rayonnement sur lesdites zones, ainsi qu'un récepteur de rayonnement mesurant le rayonnement traversant lesdites zones, le signal de sortie du récepteur de rayonnement étant constitué d'un train d'impulsions avec un rapport prescrit de la longueur d'impulsion relativement à la pause d'impulsion,
**caractérisé en ce que** l'émetteur fonctionne avec une puissance très élevée, de préférence maximale, et les zones alternant mutuellement sur le support de code sont choisies de manière telle quant à leur rapport de longueur, que le signal de sortie du récepteur de rayonnement atteigne ledit rapport de longueur prescrit.

2. Dispositif d'exploration selon la revendication 1, **caractérisé en ce que** le rapport de longueur est de 1 :1.

3. Dispositif d'exploration selon la revendication 1 ou 2, **caractérisé en ce que** le support de code (2) est un disque denté sur la périphérie duquel sont réparties lesdites zones (1, 3) selon une forme circulaire.

4. Dispositif d'exploration selon la revendication 3, **caractérisé en ce que** le disque présente une embase annulaire qui est prévue annulairement par rapport à l'axe de rotation du disque et concentriquement par rapport à celui-ci, et dans laquelle sont usinées les dents (1).

5. Dispositif d'exploration selon l'une des revendications précédentes, **caractérisé en ce que** l'émetteur comprend un phototransistor et le récepteur une photodiode.
